# EUROPEAN PATENT SPECIFICATION

(11) **EP 0 475 198 B1**
(45) Date of publication and mention of the grant of the patent: **17.05.1995**
(21) Application number: 91114467.3
(22) Date of filing: 28.08.1991
(51) Int. Cl.: B29C 43/18, B29C 70/02, B29C 65/66

(54) **Compression moulding of a sheet and resin article, and product thus obtained**
Formpressen eines Formkörpers aus einer Folie und einer Harzschicht, und so hergestelltes Erzeugnis
Moulage par compression d'un article composé d'une feuille et d'une couche de résine, et produit amicé obténu

(30) Priority: 29.08.1990 JP 229007/90
(43) Date of publication of application: 18.03.1992
(73) Proprietor: TOYODA GOSEI CO., LTD., Nishikasugai-gun Aichi-ken (JP)
(72) Inventor: Sakata, Shoji, c/o TOYODAO GOSEI CO., LTD., Nishikasugai-gun, Aichi (JP); Ito, Keizou, c/o TOYODAO GOSEI CO., LTD., Nishikasugai-gun, Aichi (JP); Kato, Takashi, c/o TOYODAO GOSEI CO., LTD., Nishikasugai-gun, Aichi (JP); Ando, Hikaru, c/o TOYODAO GOSEI CO., LTD., Nishikasugai-gun, Aichi (JP)
(74) Representative: Blumbach, Kramer & Partner

(56) References cited:
- EP-A- 0 268 954
- EP-A- 0 288 130
- FR-A- 2 262 588
- US-A- 4 878 827
- PATENT ABSTRACTS OF JAPAN vol. 11, no. 196 (M-601)(2643) 24 June 1987 & JP-A-62 019 419 (MEIWA SANGYO) 19 July 1985

## Description

### BACKGROUND OF THE INVENTION

### 1. Field of Industrial Utility

This invention relates to a sheet in-mold molded product, such as a glove door and an undercover of an automobile, and a method of molding the same, and more particularly, to a structure and a method of processing an end portion thereof.

### 2. Related Art

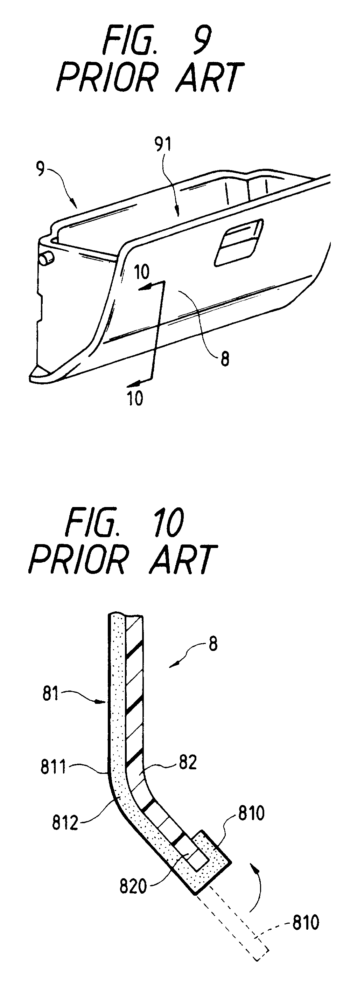

Some internal parts of an automobile are formed by sheet in-mold molded products. Examples for such products and a method for molding the same are disclosed in JP 62-19419-A. For example, as shown in Figs. 9 and 10, a glove box 9 provided in front of a front passenger's seat of an automobile comprises a box portion 91, and an openable glove door 8. As shown in Fig. 10, the glove door 8 is formed by integrally molding a sheet 81 to a substrate 82. The sheet 81 is composed of a surface layer 811 and a porous back foam layer 812 bonded thereto.

The glove door 8 is integrally molded by a method in which the sheet 81, preformed into the outer shape of the glove door 8, is placed in a mold, and the substrate material 82 in a softened state is poured onto the exposed side of the back foam layer 812 of the sheet 81. Namely, this is a sheet in-mold molded product.

When the glove door 8 is molded into the above sheet in-mold molded product, an end portion 810 of the sheet 81 is in an extended condition, as indicated by a dotted line in Fig. 10. Therefore, after the above molding, the end portion 810 is folded back to the reverse side of an end portion 820 of the substrate 82, and is bonded thereto by an adhesive, thus processing the end portions.

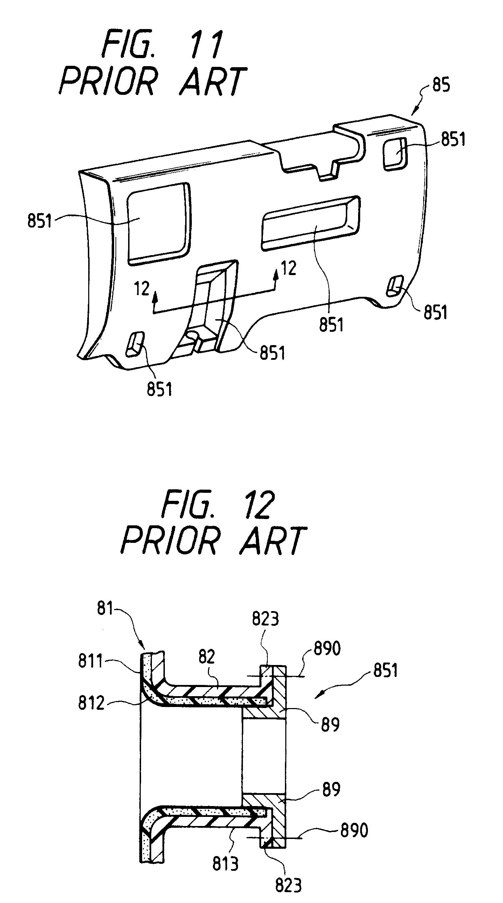

Another example of conventional sheet in-mold molded product is an undercover 85 (shown in Figs. 11 and 12) provided at the driver's seat side. This undercover has a window-like portion 851. At this window-like portion 851, an end portion of a substrate 82 is extended slightly forwardly of an end portion of a sheet 81, and the end portion of the substrate 82 has a T-shaped cross-section, as shown in Fig. 12.

The end portion of the window-like portion 851 defines an opening of a square shape (Fig. 11). As shown in Fig. 12, a bezel 89 in the form of a square frame of an L-shaped cross-section is fitted in the end portion 823 of the substrate 82 over the entire periphery of the end portion 823. Then, the bezel 89 is fixed to the end portion 823 of the substrate 82 by screws 890.

The end portion processing is done in order to prevent the end portions of the sheet 81 and the substrate 82 from separating from each other and also to enhance the appearance from the viewpoint of design.

In the above conventional end portion processing methods, however, the sheet 81 in Fig. 10 is folded back and is bonded by an adhesive, or is fixed by a tacker. With respect to the end portion processing of the window-like portion in Fig. 12, the frame-like bezel is fixed by the screws.

Therefore, in either case, after the sheet in-mold molded product is molded, a further end portion processing step is needed, and a separate part, such as a tacker and a bezel, is needed. As a result, the production efficiency is low, and the cost is high.

Further, in the conventional sheet in-mold molded product, the adhesive may be exposed at the end portion, thus adversely affecting the appearance from the viewpoint of design.

### SUMMARY OF THE INVENTION

With the above problems in mind, it is an object of this invention to provide a sheet in-mold molded product which does not require any end portion processing, and also to provide a method of producing the same.

According to the present invention, there is provided a sheet in-mold molded product wherein a substrate is molded to be integral with a sheet composed of a surface layer and a back foam layer on a reverse side of said surface layer; wherein at an end portion of said sheet in-mold molded product, an end portion of said sheet is covered in a U-shaped manner by said substrate which is extended to the front side of said sheet.

The most important feature of the present invention is that the molding is carried out in such a manner that the end portion of the sheet is covered by the substrate which is extended to the front side of the sheet.

In the present invention, the sheet comprises the sheet-like surface layer, and the back foam layer bonded to the surface layer. The surface layer comprises a skin, a fabric layer, or the like. The surface layer is made of a thermoplastic elastomer of a vinyl chloride type, a urethane type or an olefin type. The back foam layer is made of a foamed material such as polyurethane and polypropylene. The substrate is made of polypropylene, polyvinyl chloride, polyethylene, or the like.

The present invention also provides a method of producing a sheet in-mold molded product wherein a sheet, which is formed into a predetermined shape and is composed of a surface layer and a back foam layer, is placed in a mold with the foam layer facing a mold cavity into which is poured a substrate material in a softened state. An end portion of the sheet is placed on a support plate projected into the cavity which includes a U-shaped portion extending around the end portion of the sheet to the opposite side of the support plate. When substrate material is poured into the cavity, the back foam layer of said sheet is compressed by the pouring pressure of the substrate material. After the molded product is removed from the mold, the back foam layer springs back to its initial thickness, so that the substrate extends to the front side of the sheet to cover the end portion of said sheet in a U-shaped manner.

There are several important features of the method of the present invention. The cavity, formed in the mold when the pre-shaped sheet is placed in the mold, is provided at the back side of the sheet, and includes the U-shaped portion extending from the back side of the sheet around the end portion of the sheet. The support plate projects into the U-shaped portion of the cavity at the front side of the end portion of the sheet and the sheet is compressed by the softened state of the substrate material poured into the cavity during the molding. After the molded product is removed from the mold, the back foam layer springs back to its initial thickness of its own accord, so that the end portions of the substrate and the sheet are in intimate contact with each other.

In the present method, the sheet, before being placed in the mold, is formed by vacuum molding or the like into the shape necessary for the final molded product, and the end of the sheet is trimmed (cut) into a shape necessary for the final molded product.

For placing the thus shaped sheet in the mold, the surface layer of the sheet is held in contact with the cavity wall in the mold. Therefore, the back foam layer of the sheet is bonded to the substrate.

The support plate projects into the cavity of the mold at the region where the end portion of the sheet in-mold molded product is molded. The end portion of the sheet is placed on the front side of the support plate.

When the sheet in-mold molded product is removed from the mold after the molding operation, at the end portion of the sheet in-mold molded product, a gap formed by the support plate of the mold remains between the front side of the sheet and the U-shaped end portion of the substrate. However, this gap is soon eliminated when the back foam layer of the sheet springs back and restores itself to its initial thickness, so that the front side of the sheet is brought into intimate contact with the substrate.

When the substrate material is poured into the cavity of the mold, the back foam layer of the sheet is compressed by its pouring pressure, and when the sheet in-mold molded product is taken out from the mold after the molding, the back foam layer is released from this pressure, thereby causing the above spring-back. In this connection, preferably, the thickness of the support plate of the mold should be generally equal to or slightly smaller than the thickness of the above spring-back portion. Specifically, it is preferred that the thickness of the support plate be 0.5 to 1 mm.

In the sheet in-mold molded product of the present invention, the end portion of the sheet is covered in a U-shaped manner by the substrate which is extended to the front side of the sheet. Therefore, the end portions of the sheet and the substrate will not be separated from each other. Further, since these two end portions are integrally molded together, they will not be separated from each other even after a long period of use, which contrasts with the case using an adhesive. The end portion processing does not use an adhesive, a tacker, a bezel and so on, as is the case with the prior art. Therefore, the appearance of the end portion is excellent from the viewpoint of design, and the cost is low.

Therefore, according to the present invention, there can be provided a sheet in-mold molded product which is excellent in design appearance, and is inexpensive.

In the production method according to the present invention, at the time of the molding, the end portion of the sheet is placed on the support plate in the mold, and when the substrate material is poured, the back foam layer of the sheet is compressed by its pouring pressure. After the molded product is taken out from the mold, the back foam layer is restored by its spring back, and the substrate covers the end portion of the sheet in a U-shaped fashion in such a manner that the substrate is extended up to the front side of the sheet. The thickness of the support plate is generally equal to the thickness of compression of the back foam layer, and the front side of the sheet is brought into intimate contact with the U-shaped end portion of the substrate by the above spring-back.

Therefore, no end portion processing step for the sheet in-mold molded product is needed. Further, since an adhesive, a tacker, a bezel and so on are not used, the cost is low.

Therefore, according to the present invention, there can be provided a method of producing the sheet in-mold molded product which does not require any end portion processing step, is excellent in design appearance, and is inexpensive.

### BRIEF DESCRIPTION OF THE DRAWINGS

Fig. 1 is a sectional view of a first embodiment of a sheet in-mold molded product of the present invention;
Fig. 2 is a sectional view of an important portion of a mold;
Fig. 3 is a sectional view of an end portion of the sheet in-mold molded product immediately after it is taken out from the mold;
Fig. 4 is a sectional view showing the condition in which a back foam layer has sprung back and therefore restored to its initial condition;
Fig. 5 is a sectional view of an important portion of a sheet in-mold molded product of a second embodiment of the present invention;
Fig. 6 is a sectional view of an important portion of a mold;
Fig. 7 is a sectional view of an important portion of a sheet in-mold molded product of a third embodiment of the present invention;
Fig. 8 is a sectional view of an important portion of a mold;
Fig. 9 is a perspective view of a glove box of the conventional example;
Fig. 10 is a sectional view of a glove door taken along the line 10 - 10 of Fig. 9;
Fig. 11 is a perspective view of an undercover of another conventional example;
Fig. 12 is a sectional view of a window-like portion of the undercover taken along the line 12 - 12 of Fig. 11;
Fig. 13 is a sectional view of a stamping mold for forming a sheet in-mold molded product of the embodiments of the present invention; and
Fig. 14 is a sectional view of an injection stamping and molding mold for forming a sheet in-mold molded product of the embodiments of the present invention.

### DETAILED DESCRIPTION OF THE PREFERRED EMBODIMENTS

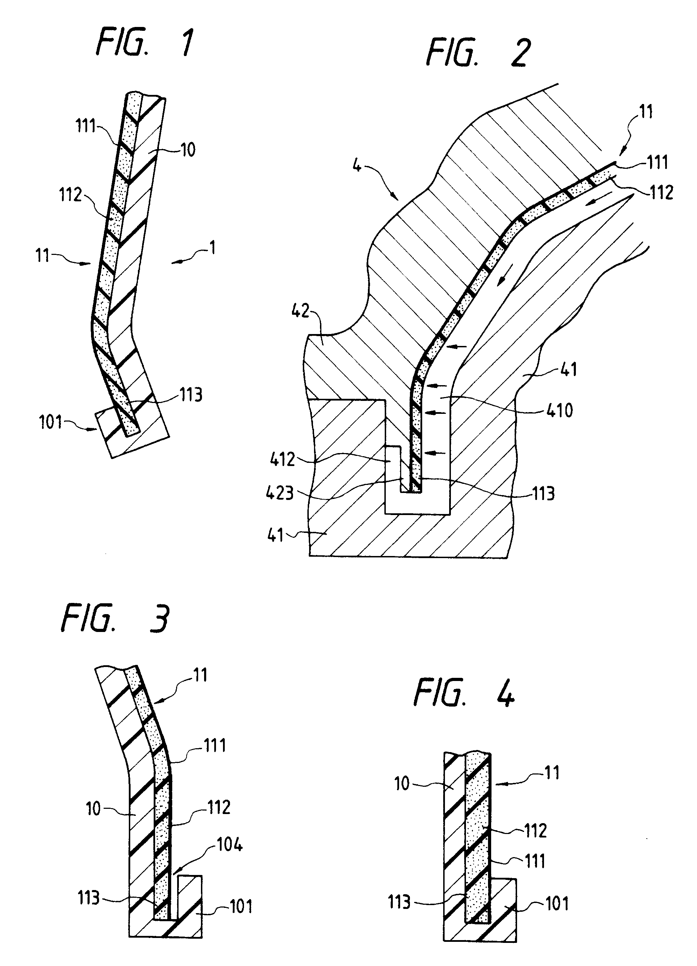

A preferred embodiment of a sheet in-mold molded product of the present invention, as well as a method of producing the same, will now be described with reference to Figs. 1 to 4. This embodiment is directed to a glove door similar to that shown in Figs. 9 and 10.

As shown in Fig. 1, the glove door 1 (sheet in-mold molded product) of this embodiment comprises a sheet 11 composed of a surface layer 111 and a back foam layer 112, and a substrate 10, the sheet 11 and the substrate 10 being integrally molded together under a low pressure. At the end portion of the sheet in-mold molded product 1, an end portion 113 of the sheet 11 is covered in a U-shaped manner by the substrate 10 which extends to the front side of the sheet 11. In other words, the substrate 10 has a U-shaped end portion 101 which covers the end portion 113 of the sheet 11 in a U-shaped manner.

The surface layer 111 of the glove door 1 is made of a polyvinyl chloride, the back foam layer 112 is made of foamed polypropylene, and the substrate 10 is made of polypropylene.

For molding the above sheet in-mold molded product, the sheet 11, composed of the surface layer 111 and the back foam layer 112 on the reverse side of the surface layer, is preformed by vacuum molding into a shape corresponding to the outer shape of the glove door 1. Further, the end portion of the sheet is trimmed into a shape necessary for the glove door 1. Then, the thus shaped sheet 11 is placed in a mold 4, as shown in Fig. 2.

The mold 4 comprises a lower mold member 41 and an upper mold member 42, and has a cavity 410 between the two mold members. The upper mold member 42 has a support plate 423 which is projected to contact the end portion 113 of the sheet 11. Provided between the reverse side of the support plate 423, on which the sheet is not to be placed, and the lower mold member 41 is a U-shaped portion or cavity 412 for forming the end portion 101 of the substrate. The thickness of the support plate 423 is about 0.6 mm.

For carrying out the molding, the sheet 11 is placed on the upper mold member 42. At this time, the surface layer 111 of the sheet 11 is held in contact with the upper mold member 42. The end portion 113 of the sheet 11 is placed on the support plate 423. Thereafter, the upper mold member 42 and the lower mold member 41 are closed together, and the substrate material in a softened state is poured into the cavity 410.

During the pouring of the substrate material, the back foam layer 112 of the sheet 11 is urged toward the upper mold member 42 by a pouring pressure, so that the back foam layer 112 is compressed. The poured substrate material moves in the cavity 410, and fills in the U-shaped portion 412 at the reverse side of the support plate 423. Thereafter, the upper mold member 42 and the lower mold member 41 are separated from each other, and the sheet in-mold molded product is taken out.

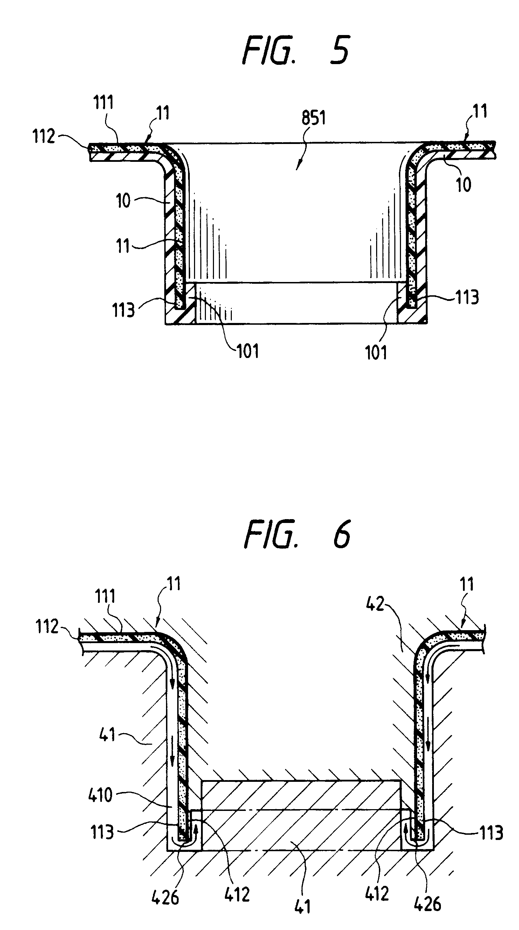

As shown in Fig. 3, in the sheet in-mold molded product, the end portion 113 of the sheet 11 is covered by the U-shaped end portion 101 of the substrate 10. However, immediately after the molded product is taken out from the mold, the back foam layer 112 produces a spring back, and therefore is restored from its compressed condition (which has been caused by the pouring pressure of the substrate material during the molding) into the initial condition. Therefore, as shown in Fig. 4, a gap 104 is substantially filled by the thickness of the restored sheet 11, so that the sheet 11 is held in intimate contact with the U-shaped end portion 101 of the substrate. As a result, the sheet in-mold molded product shown in Fig. 1 is obtained.

As described above, in the sheet in-mold molded product of this embodiment, the substrate 10 is molded to be extended to the front side of the sheet 11 in a U-shaped manner to cover the end portion 113 of the sheet 11. Therefore, the end portions of the sheet 11 and the substrate 10 will not be separated from each other. Further, since these two end portions are integrally molded together, they will not be separated from each other even during a long period of use, as in contrast with the case where they are bonded together by an adhesive.

The end portion processing does not need an adhesive, a tacker, a bezel and so on as is the case with the prior art, and therefore the appearance of the end portion from the viewpoint of design is excellent. For this reason, the cost is low.

In the above production method, the amount of compression of the back foam layer 112 by the poured substrate material and the thickness of the support plate 423 are coordinated such that when the back foam layer 112 springs back upon removal of the molded product from the mold, the above gap 104 is substantially filled, so that the surface layer 111 of the sheet 11 is held in intimate contact with the inner surface of the U-shaped end portion 101 of the substrate. Therefore, in this embodiment, an end portion processing step is not needed, and the above excellent sheet in-mold molded product can be easily produced.

A second embodiment of a sheet in-mold molded product, as well as a method of producing the same, will be described with reference to Figs. 5 and 6. This embodiment is directed to an undercover similar to that shown in Figs. 11 and 12.
Namely, as shown in Fig. 5, a window-like portion 851 in the undercover of this embodiment is of a square shape (see Fig. 11), a sheet 11 is disposed on the inner side of the window-like portion 851, and a substrate 10 is disposed on the outer side.

An end portion of the sheet 11 is covered by a U-shaped end portion 101 of the substrate 10 which is extended to the front side of the sheet. The remainder is the same as in the first embodiment. The window-like portion 851 is, of course, molded simultaneously when molding the whole of the undercover.

Fig. 6 is a cross-sectional view of a portion of a mold for molding the window-like portion 851. As in the first embodiment, this mold comprises an upper mold member 42 and a lower mold member 41, and the upper mold member 42 has a support plate 426 for supporting the end portion 113 of the sheet. The support plate 426 depends from the upper mold member in a square frame-like configuration at a lower portion of a cavity 410. The cavity 410, as well as the preformed sheet 11, has a square, annular shape so as to mold the above window-like portion. The other construction, the method of pouring the substrate material, the spring-back, and so on are the same as those in the first embodiment. This embodiment achieves the same effects as the first embodiment does.

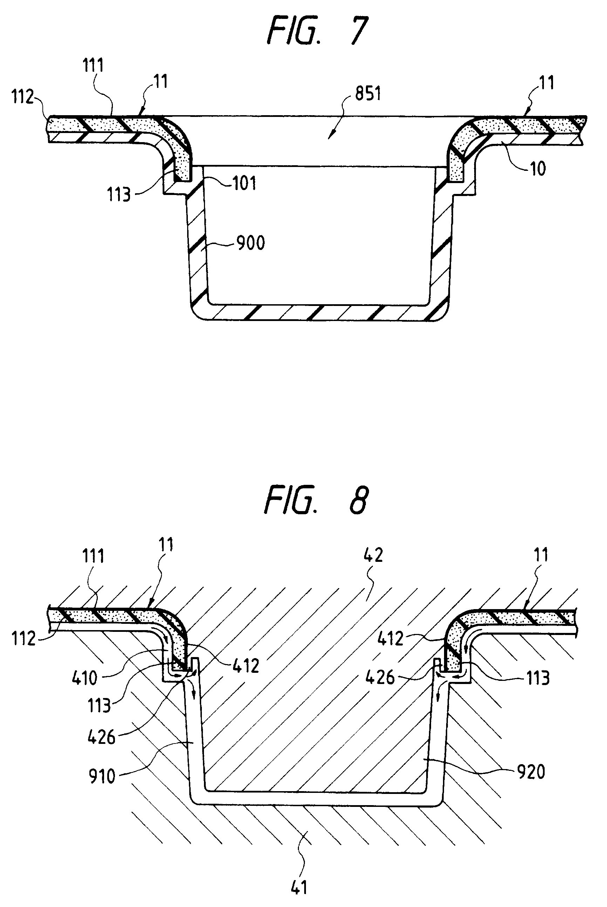

A third embodiment of a sheet in-mold molded product, as well as a method of producing the same, will be described with reference to Figs. 7 and 8. This embodiment is directed to an undercover similar to that of the second embodiment.

Namely, as shown in Fig. 7, a substrate 10 further comprises a bottom portion 900 which is integrally formed with the substrate 10. The bottom portion 900 is disposed at an opening portion of the window-like portion 851 so as to close the opening portion. The end portions of the bottom portion 900 are connected to the U-shaped end portion 101 of the substrate 10. Fig. 8 is a sectional view of a portion of a mold for molding the window-like portion 851 having the bottom portion 900.

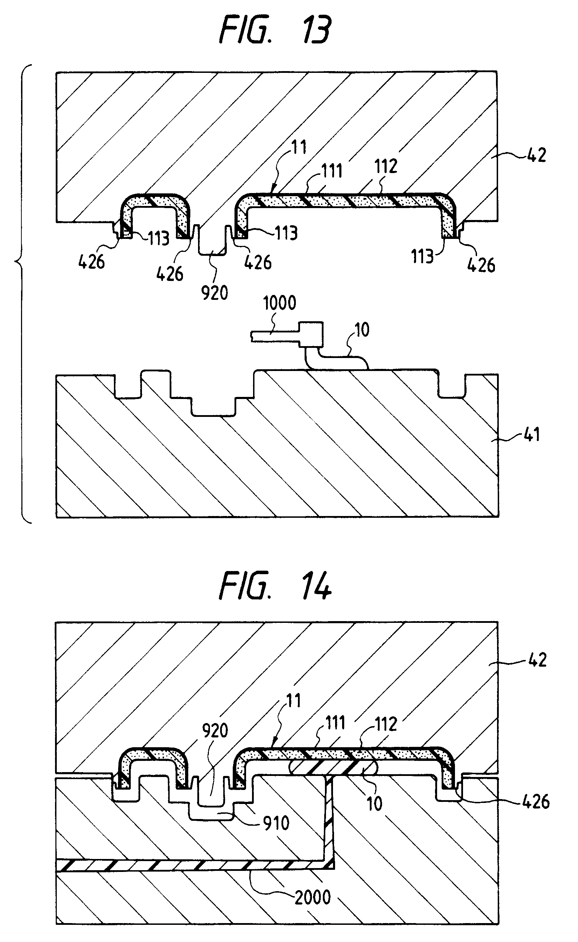

Fig. 13 is a sectional view of another mold for molding the window-like portion 851 having the bottom portion 900. As in the second embodiment, this mold comprises an upper mold member 42 and a lower mold member 41, and the upper mold member 42 has a support plate 426 for supporting the end portion 113 of the sheet and a downward projecting member 920. When the mold is closed, a cavity 910 (as in Fig. 14) is formed between the downward projecting member 920 and the lower mold member 41.

A molded product is formed by a stamping and molding method which uses this mold and which comprises the following steps. A mold having a U-shaped cavity at the end portion thereof is prepared (STEP 1). A sheet 11 composed of the surface layer 111 and the back foam layer 112 is set in an upper mold member of the mold (STEP 2) as shown in Fig. 13. A melted resin from which a substrate 10 is made is poured from a pouring means 1000 onto the lower mold member of the mold (STEP 3). The upper and lower mold members are closed and the back foam layer 112 of the sheet 11 is pressed by the melted resin in the cavity (STEP 4). Thereafter, the upper mold member 42 and the lower mold member 41 are separated from each other so as to take the sheet in-mold molded product out from the mold (STEP 5). It should be noted that there is a gap located between the mold and the foamed layer in the compressed condition immediately after the molded product is taken out. At this time, the gap is substantially corresponding with the projection plate 426 in this configuration. However, immediately after the molded product is taken out from the mold, the back foam layer 112 springs back, and therefore is restored from its compressed condition (which has been caused by the pouring pressure of the substrate material during the molding) to its initial condition, so that a gap located at the end portion of the U-shaped cavity is substantially filled up.

Fig. 14 is a sectional view of another mold for molding the window-like portion 851 having the bottom portion 900. The product of this mold is formed by an injection stamping and molding method. The mold which is used in the injection stamping and molding mold comprises an upper mold member 42 and a lower mold member 41'. The lower mold member 41' has a resin supplying passageway 2000. An end portion of the resin supplying passageway 2000 communicates with the cavity of the mold and the other end portion of the resin supplying passageway 2000 is connected to a resin supplying means (not shown). The construction is otherwise the same as that in the Fig. 13 embodiment.

A molded product is formed by an injection stamping and molding method which uses this mold and which comprises the following steps. A mold having a U-shaped cavity at the end portion thereof is prepared (STEP 1). A sheet 11 comprising the surface layer 111 and the back foam layer 112 is set in an upper mold member of the mold (STEP 2). A melted resin from which a substrate 10 is made is ejected from a resin supplying passageway 2000 onto the lower mold member of the mold before closing the upper mold member 42 and the lower mold member 41' completely (STEP 3). The upper mold member and the lower mold member are completely closed (STEP 4) and the back foam layer 112 of the sheet 11 is compressed by the pressure of the melted resin filled into the cavity. Thereafter, the upper mold member 42 and the lower mold member 41 are separated from each other so as to take the sheet in-mold molded product out of the mold (STEP 5). Immediately after the molded product is taken out of the mold, the back foam layer 112 springs back by itself, and therefore is restored from its compressed condition (which has been caused by the pouring pressure of the substrate material during the molding) to its initial condition, so that a gap located at the end portion of the U-shaped cavity is substantially filled up.

Particularly, in the Fig. 13 and 14 embodiments, the end portion processing at the opening of the window-like portion is effected simultaneously when molding the sheet in-mold molded product. In the prior art employing a bezel, the end portion processing of the window-like portion is complicated because of the mounting of the bezel, and the cost is increased. This problem is serious, particularly when the sheet in-mold molded product has many window-like portions. The present invention provides an excellent technique for overcoming such problems of the prior art.

While the present invention has been described above with respect to preferred embodiments thereof, it should of course be understood that the present invention should not be limited only to these embodiments but various changes or modifications may be made without departure from the scope of the invention as defined by the appended claims.

## Claims

1. A sheet in-mold molded product comprising:
a sheet (11) composed of a surface layer (111) and a back foam layer (112) on a first side of said surface layer; and
a substrate (10) molded integrally with said sheet on a second side of said surface layer,
**characterized in that** at an end portion of said product, said substrate (10) extends in a U-shaped manner to cover an end portion of said sheet (11).

2. A method of producing a sheet in-mold molded product using a mold (4) having an upper mold member (42) and a lower mold member (41) and a cavity (410) when the mold is closed,
comprising the steps of
setting a sheet (11) comprising a foam layer (112) in said mold (4),
closing the mold (4),
pouring a substrate material into the cavity (410) to form a molded product having a substrate (10) along a side of said sheet (11) and
removing said molded product from said mold (4),
characterized by
using a mold (4) with the cavity (410), including an U-shaped portion (412) at an end portion of the mold when the mold is closed,
compressing said foam layer (112) with the substrate material poured into said cavity to form a molded product having a substrate (10) with an U-shape around said end portion of the sheet (11) to face an opposite side of the sheet with a gap (104) therebetween, and
removing said molded product from said mold thereby restoring said foam layer (112) from its compressed condition to the initial condition and decreasing said gap.

3. A method according to claim 2, in which said compressing step comprising the steps of:
pouring said material into said cavity;
closing said upper mold member and said lower mold member; and
filling said cavity with said material while said foam layer is compressed.

4. A method according to claim 2, in which said gap is formed by a support plate (423) which is fixed to said upper mold member.

## Patentansprüche

1. Erzeugnis mit einer in einer Form geformten Folie, enthaltend:
eine Folie (11), die aus einer Oberflächenschicht (111) und einer Grundschaumschicht (112) auf einer ersten Seite der Oberflächenschicht zusammengesetzt ist, und
ein integral mit der Folie geformtes Substrat (10) auf einer zweiten Seite der Oberflächenschicht,
dadurch **gekennzeichnet**, daß an einem Endbereich des Erzeugnisses sich das Substrat (10) U-förmig erstreckt, so daß es einen Endbereich der Folie (11) bedeckt.

2. Verfahren zum Herstellen eines Erzeugnisses mit einer in einer Form geformten Folie unter Verwendung einer Form (4) mit einem oberen Formbauteil (42) und einem unteren Formbauteil (41) und einem bei geschlossener Form ausgebildeten Hohlraum (410), enthaltend die Schritte
Einsetzen einer Folie (11), die eine Schaumschicht (112) enthält, in die Form (4),
Schließen der Form (4),
Gießen eines Substratmaterials in den Hohlraum (410), um ein geformtes Erzeugnis mit einem Substrat (10) längs einer Seite der Folie (11) zu formen, und
Entfernen des geformten Erzeugnisses aus der Form (4),
dadurch **gekennzeichnet**, daß
eine Form (4) mit einem Hohlraum (410) verwendet wird, der einen U-förmigen Bereich (412) an einem Endbereich der Form, wenn diese geschlossen ist, enthält,
die Schaumschicht (112) mit dem in den Hohlraum gegossenen Substratmaterial zum Ausbilden eines geformten Erzeugnisses (10), das eine U-Form um den Endbereich der Folie (11) herum aufweist, komprimiert wird, um die gegenüberliegende Seite der Folie unter Bildung eines Zwischenraums (104) abzudecken, und daß
das geformte Erzeugnis aus der Form entfernt wird, wodurch die Formschicht (112) aus ihrem komprimierten Zustand in den ursprünglichen Zustand unter Verkleinerung des Zwischenraums wiederhergestellt wird.

3. Verfahren nach Anspruch 2, bei welchem der Kompressionsschritt die Schritte enthält:
Gießen des Materials in den Hohlraum,
Schließen des oberen und des unteren Formbauteils, und
Füllen des Hohlraums mit dem Material, während die Schaumschicht komprimiert wird.

4. Verfahren nach Anspruch 2, bei welchem der Zwischenraum durch eine Stützplatte (423) gebildet ist, die an dem oberen Formbauteil befestigt ist.

## Revendications

1. Produit surmoulé sur une feuille, comprenant :
- une feuille (11) composée d'une couche de surface (111) et d'une couche de mousse postérieure (112) sur un premier côté de ladite couche de surface, et
- un substrat (10) moulé intégralement avec ladite feuille sur un second côté de ladite couche de surface,
caractérisé en ce qu'à une partie terminale dudit produit ledit substrat (10) s'étend sous la forme d'un U pour couvrir une partie terminale de ladite feuille (11).

2. Procédé pour produire un produit surmoulé sur une feuille en utilisant un moule (4) qui comporte un élément de moule supérieur (42) et un élément de moule inférieur (41), et une cavité (410) lorsque le moule est fermé,
comprenant les étapes consistant à :
- placer une feuille (11) qui comprend une couche de mousse (112) dans ledit moule (4),
- fermer le moule (4),
- verser un matériau de substrat à l'intérieur de la cavité (410) pour former un produit moulé ayant un substrat (10) le long d'un côté de ladite feuille (11), et
- enlever ledit produit moulé hors dudit moule (4),
caractérisé
- en ce qu'on utilise un moule (4) avec une cavité (410) qui comprend une partie en forme de U (412) à une partie terminale du moule lorsque le moule est fermé,
- en ce qu on comprime ladite couche de mousse (112) avec le matériau de substrat versé à l'intérieur de ladite cavité pour former un produit moulé qui possède un substrat (10) avec une forme en U autour de ladite partie terminale de la feuille (11) pour faire face à un côté opposé de la feuille, avec un intervalle (104) entre eux, et
- en ce qu'on enlève ledit produit moulé hors du dit moule, ramenant grâce à ceci ladite couche de mousse (112) depuis sa condition comprimée à la condition initiale et en réduisant ledit intervalle.

3. Procédé selon la revendication 2, dans lequel ladite étape de compression comprend les étapes consistant à :
- verser ledit matériau à l'intérieur de ladite cavité ;
- refermer ledit élément de moule supérieur et ledit élément de moule inférieur ; et
- remplir ladite cavité avec ledit matériau tandis que ladite couche de mousse est comprimée.

4. Procédé selon la revendication 2, dans lequel ledit intervalle est formé par une plaque de support (423) qui est fixée audit élément de moule supérieur.
